## Europäisches Patentamt
## European Patent Office
## Office européen des brevets

(19)

(11) Veröffentlichungsnummer : **0 133 527 B2**

(12) **NEUE EUROPÄISCHE PATENTSCHRIFT**

(45) Veröffentlichungstag der neuen Patentschrift :
20.02.91 Patentblatt 91/08

(51) Int. Cl.⁵ : **H02K 7/08, F16C 17/08**

(21) Anmeldenummer : **84109010.3**

(22) Anmeldetag : **30.07.84**

(54) **Anordnung zur Begrenzung des Axialspiels einer gleitgelagerten Welle eines Motorantriebes.**

(30) Priorität : 11.08.83 DE 3329120

(43) Veröffentlichungstag der Anmeldung :
27.02.85 Patentblatt 85/09

(45) Bekanntmachung des Hinweises auf die
Patenterteilung :
22.10.86 Patentblatt 86/43

(45) Bekanntmachung des Hinweises auf die
Entscheidung über den Einspruch :
20.02.91 Patentblatt 91/08

(84) Benannte Vertragsstaaten :
DE FR GB IT SE

(56) Entgegenhaltungen :
DE-A- 1 638 213
DE-A- 2 809 930
DE-B- 1 178 934
FR-A- 1 415 584
FR-A- 2 050 196
FR-A- 2 253 940
GB-A- 2 016 213
US-A- 3 549 218

(73) Patentinhaber : Siemens Aktiengesellschaft
Wittelsbacherplatz 2
D-8000 München 2 (DE)

(72) Erfinder : Adam, Peter
Allerseeweg 25
D-8706 Höchberg (DE)
Erfinder : Heidenfelder, Anton
Mittl. Heerbergstrasse 13
D-8700 Würzburg (DE)
Erfinder : Schilling, Werner
Untere Goldbergstrasse 20
D-8700 Würzburg (DE)
Erfinder : Becker, Paul
Erlenweg Nr. 6
D-8700 Würzburg (DE)
Erfinder : Ihle, Olai
Thoma-Rieder-Strasse 10
D-8702 Margetshöchheim (DE)

EP 0 133 527 B2

Jouve, 18, rue Saint-Denis, 75001 PARIS

## Beschreibung

Die Erfindung bezieht sich auf eine Anordnung zur Begrenzung des Axialspiels einer gleitgelagerten Welle eines Motorantriebs gemäß Oberbegrifft des Patentanspruchs 1 bzw. 2 eine derartige Anordnung ist aus der DE-OS 3150 572 bekannt.

Im bekannten Fall ist zur Begrenzung des Axialspiels einer Motor-Getriebe-Welle eines Fensterheber-Antriebs vor dem getriebeseitigen Wellenende eine in das Getriebegehäuse einschraubbare Justierschraube vorgesehen, auf die stirnseitig eine Anlauffläche der Motor-GetriebeWelle anlaufen kann. Das zwischen der Anlauffläche der Motor-Getriebe-Welle einerseits und der Anlauffläche der Justierschraube andererseits gegebene Axialspiel kann durch Drehen der Justierschraube vergrößert bzw. verkleinert werden. Eine Sicherung der Justierschraube in der ein bestimmtes Axialspiels gewährleistenden Einstellung ist nach dem Einstellvorgang unumgänglich.

Aufgabe der vorliegenden Erfindung ist es, den Aufwand zur Einstellung des zulässigen bzw. gewünschten Axialspiels, insbesondere unter Berücksichtigung des Einsatzes von Handhabungsautomaten, weiter zu mindern. Die Lösung dieser Aufgabe gelingt erfindungsgemäß bei einer Anordnung der eingangs genannten Art durch die Lehre des Patentanspruchs 1 bzw. 2. Vorteilhafte Ausgestaltungen der Erfindung sind jeweils Gegenstand der Unteransprüche 3 bis 6. Ein Verfahren zur Begrenzung des Axialspiels wird in Anspruch 7 gekennzeichnet.

Die erfindungsgemäße Anordnung erlaubt die Begrenzung des Axialspiels durch eine einfache Handhabung, indem lediglich aus einem vorhandenen Reservoir oder aus einer Stanz- und/ oder Prägevorrichtung jeweils die gewünschte Scheibe unterschiedlicher, aufgrund des Vergleichs zwischen Ist- und Soll-Axialspiel zu wählenden Dicke oder unterschiedlich langer Warzentiefe herausgegriffen bzw. in der StanzPrägevorrichtung aufgrund der eingegebenen Daten von Ist- und Soll-Axialspiel hergestellt und anschließend in die gehäuseseitige Tasche eingesetzt werden braucht.

Wenn zweckmäßigerweise ein Motorantrieb mit zumindest in axialer Richtung teilbaren Getriebe-Gehäusehälften vorgesehen ist, wobei in dem schalenförmig ausgebildeten Getriebe-Gehäuseteil die Getriebeteile vormontierbar sind und das anschließend durch Gegenlegen eines zweiten Gehäuseteils oder eines Gehäusedeckels verschließbar ist, kann in besonders einfacher Weise eine Fisierung der Scheiben dadurch erreicht werden, daß diese lediglich radial in das erste Gehäuseteil einsteckbar sind, in weitere fertigungs- und montagetechnischer Vereinfachung ist die Scheibe außerhalb ihrer Anlaufzone mit aus ihrer Scheibenebene ragenden, elastisch verformbaren Klemm-Mitteln versehen, mittels derer die Scheibe in korrespondierenden, gehäusefesten Schlitzöffnungen in ihrer Einsteckendlage gehäusefest feststeckbar ist.

Die Erfindung sowie weitere vorteilhafte Ausgestaltungen werden im folgenden anhand eines schematisch dargestellten Ausführungsbeispiels in der Zeichnung näher erläutert ; darin zeigen :

Figur 1 in einem Längsteilschnitt einen Fensterheber-Getriebemotor für ein Kraftfahrzeug,

Figur 2, 3 in einer Seitenansicht zwei Scheiben unterschiedlicher Dicke zur Begrenzung des Axialspiels,

Figur 4 in Draufsicht die Scheibe gemäß Fig. 2 bzw. Fig. 3,

Figur 5 im Schnitt eine Scheibe mit angeprägter Warze zur Begrenzung des Axialspiels,

Figur 6 in Seitenansicht die Scheibe gemäß Fig. 5,

Figur 7 in Draufsicht die Scheibe gemäß Fig. 5 bzw. Fig. 6.

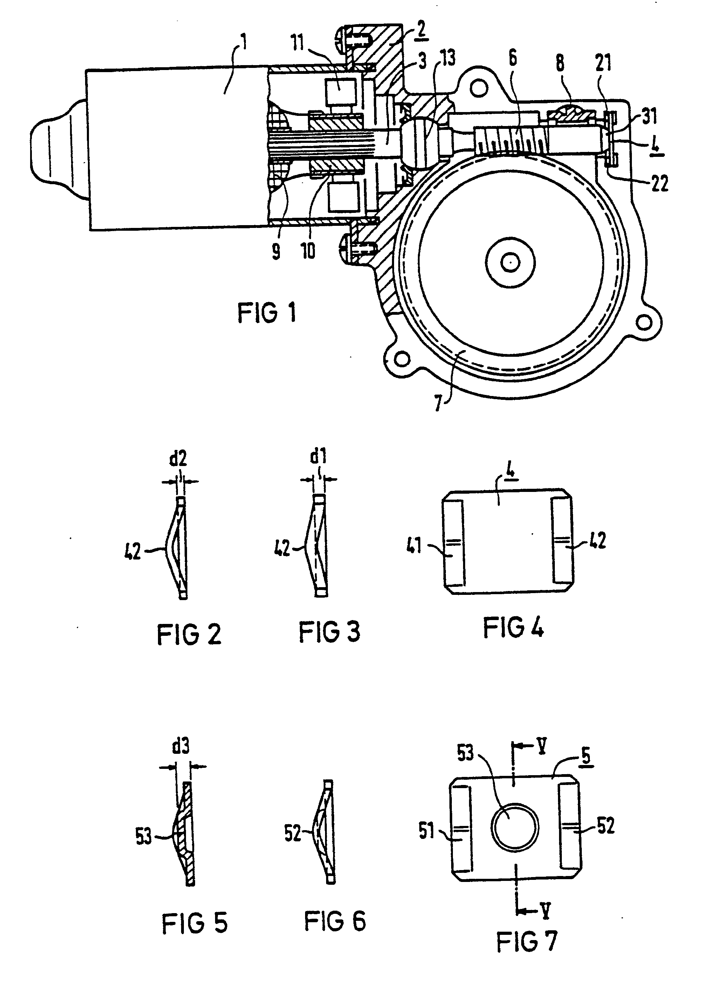

Der in Fig. 1 dargestellte Fensterheber-Getriebemotor für ein Kraftfahrzeug besteht im wesentlichen aus einem halbschalenförmigen Getriebe-Gehäuseteil 2 und einem an dessen linke Seite angeflanschten elektrischen Antriebmotor mit einem gerollten zylindrischen Gehäuse 1. In das halbschalenförmige Getriebe-Gehäuseteil 2 ragt die gemeinsame Motor-Getriebe-Welle 3, die an ihrem motorseitigen Ende einen Rotor 9 und einen von einem Bürsten-System 11 beschliffenen Kommutator 10 aufnimmt und an ihrem rechten freien Wellenende eine Schnecke 6 aufnimmt, die mit einem Schneckenrad 7 betriebsmäßig in Eingriff steht, das seinerseits in hier nicht dargestellter Weise mit weiteren Antriebsmitteln, insbesondere einer Seilscheibe eines Seilzug-Fensterhebers, gekuppelt sein kann. Das rechte freie Wellenende der Motor-Getriebe-Welle 3 ist im Getriebe-Gehäuseteil 2 in einem Kalottenlager 13 gelagert und gleichzeitig gegen unzulässige radiale Durchbiegungen aufgrund des Schneckentriebes durch ein Abstützlager 8 gesichert. Sämtliche Getriebesind nach dem « Geigenkasten-prinzip » in das halbschalenförmige Getriebe-Gehäuseteil 2 einlegbar, das abschließend durch ein hier nicht dargestelltes weiteres Getriebe-Gehäuseteil, insbesondere einen Getriebedeckel, verschließbar ist.

Ähnlich wie die übrigen Getriebeteile ist auch die erfindungsgemäß zur Begrenzung des Axialspiels vorgesehene Scheibe 4 gemäß Fig. 2-4 bzw. Scheibe 5 gemäß Fig. 5-7 in den GetriebeGehäuseteil 2 einsteckbar. Dazu sind oberhalb und unterhalb bzw. beidseitig der Anlaufzone der Scheibe 4 bzw. der Scheibe 5, gegen die das rechte konisch ausgebildete Wellenende 31 der Motor-Getriebe-Welle 3 anläuft, zwei Schlitzöffnungen 21, 22 vorgesehen, in die die Scheibe 4 bzw. 5 einklemmbar ist.

Die nähere Ausgestaltung der in die Schlitzöffnungen 21, 22 einsteckbaren bzw. einklemmbaren Scheiben ist in zwei Ausführungsbeispielen gemäß Fig. 2 bis Fig. 4 bzw. Fig. 5 bis Fig. 7 dargestellt. Fig. 4 zeigt die Draufsicht auf eine Scheibe 4, die beidseitig ihrer mittigen Anlaufzone aus ihrer Scheibenebene ragende, elastisch verformbare Klemm-Mittel aufweist, mittels derer die Scheiben in den korrespondierenden gehäusefesten Schlitzöffnungen 21, 22 in ihrer Einsteckendlage feststeckbar ist. Nach der Ausgestaltung der Erfindung sind - wie insbesondere aus der Seitenansicht gemäß Fig. 2 und Fig. 3 hirsichtlich der Scheibe nach Fig. 4 und aus der Seitenansicht gemäß Fig. 6 hinsichtlich der Scheibe in Fig. 7 ersichtlich - beidseitig der Anlaufzone in Einsteckrichtung verlaufende aus der Scheibe seitlich freigestanzte und ansonsten aus der Scheibenebene herausgedrückte federnde Nasen 41 ; 42 bzw. 51 ; 52 vorgesehen. Anstelle der Klemm-Mittel können an der Scheibe auch Vorsprünge angeformt sein, die sich beim Einstecken in die gehäusefeste Tasche mit dieser verkrallen und daher eine auch zumindest teilweise formschlüssige Fixierung erlauben.

Zur Anpassung an die jeweiligen unterschiedlichen Ist-Axialspiele bei gleichbleibend vorgeschriebenen Soll-Axialspiel sind gemäß Fig. 2 bzw. Fig. 3 zwei Scheiben unterschiedlicher Dicke d1 bzw. d2 als Beispiele für eine gegebenenfalls größere Vielfalt von Scheiben unterschiedlicher Dicke vorgesehen, während gemäß Fig. 5 aus der Scheibe im Bereich ihrer Anlaufzone jeweils eine Warze 52 mit einer axial gerichteten geprägten Tiefen d3 entsprechend dem jeweils gewünschten Axialspiel herausgedrückt ist.

Insbesondere hinsichtlich der Begrenzung des Axialspiels mittels der Scheibenausführung nach Fig. 5 bis Fig. 7 ist in vorteilhafter Weise vorgesehen, daß die Scheiben jeweils Stanz- und/oder Prägeteile zumindest eines Blechstreifens in einer mit einer Motorantrieb-Montagevorrichtung integrierten Axialspielmeß- und Stanzprägevorrichtung sind ; dabei ist in vorteilhafter Weise vorgesehen, daß nach der Montage der Motor-Getriebe-Welle im Getriebe-Gehäuseteil 2 das jeweilige Axialspiel gemessen, aus dem Vergleich zwischen Ist-Axialspiel und Soll-Axialspiel der definierte Abstand zur Begrenzung des Axialspiels berechnet wird und aus dem Blechstreifen eine Scheibe mit entsprechend langer Warze gestanzt bzw. geprägt und anschließend diese Scheibe in die Schlitzöffnungen 21, 22 ihrer. gehäusefesten Tasche eingesteckt wird.

## Ansprüche

1. Anordnung zur Einstellung des Axialspiels einer gleitgelagerten Welle (3) eines Motorantriebs, insbesondere der Motor-Getriebewelle eines Fensterheber-Getriebemotors, mit zumindest einem gehäusefest, aufgrund eines Vergleichs zwischen Ist-Axialspiel und Soll-Axialspiel in definiertem Abstand zur Stirnseite eines Wellenendes fixierbaren Anlaufteil, **dadurch gekennzeichnet**, daß als Anlaufteil eine Scheibe (4) mit einer dem Vergleich entsprechenden Scheibendicke (d1 bzw.d2) sowie mit außerhalb ihrer Anlaufzone aus ihrer Scheibenebene ragenden, elastisch verformbaren Klemm-Mitteln in eine gehäusefeste Tasche (Schlitzöffnungen 21, 22) mit zumindest einer Öffnung im Bereich der Scheiben-Anlaufzone der Welle (3) ein- und in ihrer Einsteckendlage feststeckbar ist (Fig.1-4).

2. Anordnung zur Einstellung des Axialspiels einer gleitgelagerten Welle (3) eines Motorantriebs, insbesondere der Motor-Getriebewelle eines Fensterheber-Getriebemotors, mit zumindest einem gehäusefest, aufgrund eines Vergleichs zwischen Ist-Axialspiel und Soll-Axialspiel in definiertem Abstand zur Stirnseite eines Wellenendes fixierbaren Anlaufteil, **dadurch gekennzeichnet**, daß als Anlaufteil eine Scheibe (5) mit im Bereich ihrer Anlaufzone axial eingeformter Warze (53) mit einer dem Vergleich entsprechenden axialen Länge (d3) in eine gehäusefeste Tasche (Schlitzöffnungen 21, 22) mit zumindest einer Öffnung im Bereich der Scheiben-Anlaufzone der Welle (3) einsteckbar ist (Fig.1, 5-7).

3. Anordnung nach Anspruch 2, **dadurch gekennzeichnet**, daß die Scheibe (5) außerhalb ihrer Anlaufzone mit aus ihrer Scheibenebene ragenden, elastisch verformbaren Klemm-Mitteln versehen ist, mittels derer die Scheibe (5) in korrespondierenden gehäusefesten Schlitzöffnungen (21 bzw.22) in ihrer Einsteckendlage feststeckbar ist».

4. Anordnung nach einem der Ansprüche 1 bis 3, mit einem Motorantrieb mit in axialer Richtung geteilten Gehäuseteilen, wobei in das erste, schalenförmig ausgebildete Gehäuseteil weitere Motor- und/oder Getriebeteile vormontierbar sind und das durch Gegenlegen des zweiten Gehäuseteils, insbesondere eines Gehäusedeckels, verschließbar ist, **dadurch gekennzeichnet**, daß die Scheibe (4 bzw.5) radial in das erste Gehäuseteil (Getriebe-Gehäuseteil 2) einsteckbar ist.

5. Anordnung nach einem der Ansprüche 1 bis 4, **dadurch gekennzeichnet**, daß als verformbare Klemm-Mittel beidseitig der Anlaufzone in Einsteckrichtung verlaufende aus der Scheibe (4 bzw.5) seitlich freigestanzte und ansonsten aus der Scheibenebene herausgedrückte federnde Nasen (41, 42 bzw.51, 52) vorgesehen sind.

6. Anordnung nach einem der Anspüche 1 bis 5, **dadurch gekennzeichnet**, daß die Scheiben. (4 bzw.5) jeweils Stanz- und/oder Prägeteile zumindest eines Blechstreifens sind.

7. Verfahren zur Einstellung des Axialspiels mit einer Anordnung nach Anspruch 6, **dadurch gekennzeichnet**, daß nach Montage der Welle in ihrem Gehäuse das jeweilige Ist-Axialspiel gemessen, aus dem Vergleich zwischen Ist-Axialspiel und Soll-Axialspiel der definierte Abstand berechnet, eine Scheibe entsprechender Dicke gestanzt bzw. geprägt oder eine Scheibe mit entsprechend langer Warze gestanzt und geprägt und anschließend die Scheibe in ihre gehäusefeste Tasche gesteckt wird.

## Revendications

1. Dispositif pour régler le jeu axial d'un arbre (3), monté dans un palier lisse, d'un dispositif d'entraînement à moteur, notamment de l'arbre du moteur et de la transmission d'un moto-réducteur de lève-glace, comportant au moins un organe d'application solidaire du carter et pouvant être fixé à une distance définie de la face frontale d'une extrémité de l'arbre, sur la base d'une comparaison entre le jeu axial réel et le jeu axial réel de consigne, caractérisé par le fait qu'en tant qu'organe d'application, un disque (4) possédant une épaisseur (d1 ou d2) correspondant à la comparaison, ainsi que, à l'extrémité de sa zone d'application, des moyens de serrage déformables élastiquement et faisant saillie hors du plan du disque, peut être enfiché et fixé en sa position finale enfichée dans un logement solidaire du carter (ouvertures en forme de fentes 21, 22) comportant au moins une ouverture dans la zone d'application du disque contre laquelle s'appuie l'arbre (3) (figures 1 à 4).

2. Dispositif pour régler le jeu axial d'un arbre (3), monté dans un palier lisse, d'un dispositif d'entraînement à moteur, notamment de l'arbre du moteur et de la transmission d'un moto-réducteur de lève-glace, comportant au moins un organe d'application solidaire du carter et pouvant être fixé à une distance définie de la face frontale d'une extrémité de l'arbre, sur la base d'une comparaison entre le jeu axial réel et le jeu axial réel de consigne, caractérisé par le fait qu'en tant qu'organe d'application, un disque (5) possédant un bouton (53) ménagé axialement au niveau de sa zone d'application et possédant une longueur axiale (d3) correspondant à la comparaison, peut être enfiché dans un logement solidaire du carter (ouvertures en forme de fentes 21, 22) comportant au moins une ouverture au niveau de la zone d'application du disque, contre laquelle s'appuie l'arbre (3) figures(1, 5 à 7).

3. Dispositif suivant la revendication 2, caractérisé par le fait que le disque (5) comporte, à l'extérieur de sa zone d'application, des moyens de serrage déformables élastiquement, faisant saillie hors du plan du disque et à l'aide desquels le disque (5) peut être enfiché fermement dans sa position finale enfichée, dans les ouvertures en forme de fentes correspondantes (21 ou 22) ménagées dans le carter.

4. Dispositif suivant l'une des revendications 1 à 3, comportant un dispositif d'entraînement à moteur muni d'éléments de carter séparés suivant la direction axiale, d'autres éléments du moteur et/ou de la transmission pouvant être montés par avance dans le premier élément de carter réalisé en forme de coque et qui peut être fermé par application du second élément de carter, notamment d'un couvercle de carter, caractérisé par le fait que le disque (4 ou 5) peut être enfiché radialement dans le premier élément de carter (élément 2 du carter de transmission).

5. Dispositif suivant l'une des revendications 1 à 4, caractérisé en ce qu'il est prévu, comme moyens de serrage déformables, des becs élastiques (41, 42 ou 51, 52) s'étendant suivant la direction d'enfichage, des deux côtés de la zone d'application et découpés latéralement dans le disque (4 ou 5) et ressortis par ailleurs hors du plan du disque.

6. Dispositif suivant l'une des revendications 1 à 5, caractérisé en ce que les disques (4 ou 5) sont respectivement des parties découpées et/ou estampées d'au moins une bande de tôle.

7. Procédé de réglage du jeu axial par un dispositif suivant la revendication 6, caractérisé en ce qu'il consiste à mesurer, après le montage de l'arbre dans son carter, le jeu axial réel, à calculer la distance définie à partir de la comparaison entre le jeu axial réel et le jeu axial de consigne, à découper ou à estamper un disque d'une épaisseur correspondante ou à découper ou estamper un disque ayant un bouton de longueur correspondante, et ensuite à enficher le disque dans son logement solidaire du carter.

## Claims

1. Arrangement for regulating the axial play of a shaft (3), having a journal bearing, of a motor drive, in particular of the motor transmission shaft of a geared motor of a window elevator, having at least one abutting component which can be fixed so as to be stable in relation to the housing at a specific distance from the end face of one shaft end, which distance is defined on the basis of a comparison between the actual axial play and the theoretical axial play, characterised in that a disc (4), which has a disc thickness (d1 or d2) corresponding to the comparison, and resiliently deformable clamping means projecting out of its disc plane outside its abutting zone, can be inserted as an abutting component into a pocket (slotted openings 21, 22) which is fixed in relation to the housing and has at least one opening in the region of the disc abutting zone of the shaft (3), and thus into its final insertion position (Fig. 1-4).

2. Arrangement for regulating the axial play of a shaft (3), having a journal bearing, of a motor drive, in particular of the motor transmission shaft of a geared motor of a window elevator, having at least one abutting component which can be fixed in relation to the housing at a specific distance from the end face of a shaft end, which distance is defined on the basis of a comparison between the actual axial play and the theoretical axial play, characterised in that the disc (5), having a protuberance (53) which is axially formed in the region of its abutting zone and an axial length (d3) corresponding to the comparison, can be inserted as an abutting component into a pocket (slotted openings 21, 22) which is fixed in relation to the housing and has at least one opening in the region of the disc abutting zone of the shaft (3) (Fig. 1, 5-7).

3. Arrangement according to claim 2, characterised in that outside its abutting zone the disc (5) is provided with clamping means which are resiliently deformable and project from its disc plane and by means of which the disc (5) can be inserted into corresponding slotted openings (21 or 22) which are fixed in relation to the housing, in its final insertion position.

4. Arrangement according to one of claims 1 to 3, having a motor drive with housing components which are divided in the axial direction, where further motor and/or transmission components can be pre-installed into the first cup-shaped housing component which can be sealed by positioning the second housing component, in particular a housing cover, against it, characterised in that the disc (4 or 5) can be radially inserted into the first housing component (transmission housing component 2).

5. Arrangement according to one of claims 1 to 4, characterised in that resilient projections (41, 42 or 51, 52) which are laterally stamped free from the disc (4 or 5) and otherwise forced out of the disc plane and which extend in the direction of insertion are arranged on both sides of the abutting zone as deformable clamping means.

6. Arrangement according to one of claims 1 to 5, characterised in that the discs (4 or 5) are respectively stamped and/or embossed components of at least one sheet metal strip.

7. Process for adjusting the axial play with an arrangement according to claim 6, characterised in that after the installation of the shaft in its housing the respective actual axial play is measured, the defined distance is calculated from the comparison between the actual axial play and the theoreticaly axial play, a disc of corresponding thickness is stamped or embossed or a disc having an adequately long protuberance is stamped or embossed and the disc is subsequently inserted into its pocket fixed in relation to the housing.

EP 0 133 527 B2

FIG 1

FIG 2

FIG 3

FIG 4

FIG 5

FIG 6

FIG 7